(19) Europäisches Patentamt / European Patent Office / Office européen des brevets

(11) **EP 4 431 731 A1**

(12) **EUROPEAN PATENT APPLICATION**

(43) Date of publication:
**18.09.2024 Bulletin 2024/38**

(21) Application number: **23161379.5**

(22) Date of filing: **13.03.2023**

(51) International Patent Classification (IPC):
**F03D 17/00** (2016.01)     **H01Q 13/20** (2006.01)
**H04B 5/00** (2024.01)

(52) Cooperative Patent Classification (CPC):
**F03D 17/017; F03D 17/025; H01Q 13/203;**
**H04B 5/28; H04B 17/12;** F05B 2260/80;
F05B 2270/802

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(71) Applicant: **Siemens Gamesa Renewable Energy A/S**
**7330 Brande (DK)**

(72) Inventor: **The designation of the inventor has not yet been filed**

(74) Representative: **SGRE-Association**
**Siemens Energy Global GmbH & Co. KG**
**SE I IM P Intellectual Property**
**Siemenspromenade 9**
**91058 Erlangen (DE)**

(54) **CALIBRATION DEVICE FOR LEAKY FEEDER FREQUENCY DOMAIN REFLECTOMETRY, AND WIND TURBINE**

(57)     There is described a calibration device (100), in particular for a wind turbine (1), comprising:
i) a leaky feeder (110), comprising a plurality of slots (111, 112), wherein each slot (111, 112) is associated with at least one specific resonance frequency (170);
ii) an elongated conductor (120), in particular a lead-in and/or a lead-out cable, connected to the leaky feeder (110);
iii) a frequency device (155), configured to provide an electromagnetic wave to the leaky feeder (110), and sweep the electromagnetic wave over a frequency range that includes at least one of the specific resonance frequencies (170); and
iv) a processing device (140), configured to determine the location of at least one slot (111) of the leaky feeder (110) based on the sweep over the at least one specific resonance frequency (170), and perform a calibration operation based on the determined slot location.

FIG 2

**Description**

Field of invention

The present invention relates to a calibration device comprising a leaky feeder. Further, the invention relates to a wind turbine comprising the calibration device. The invention also relates to a method of calibrating a leaky feeder path, and a specific use of frequency domain reflectometry. Thus, the present invention may relate to the technical field of wind turbines.

Art Background

A leaky feeder ("radiating cable") is a cable or waveguide that is "leaky" in that it comprises slots in an outer conductor layer, so that electromagnetic signals leak in and/or out through said slots along the entire length of the leaky feeder or parts of it. Accordingly, a leaky feeder can be especially interesting for applications, where signals should be transmitted/received along an extension, for example a tunnel, a mine, or a train.

Wind turbines can be considered as an important energy production source and it can be expected that their importance and distribution will grow more and more. Accordingly, there is constant research and development undertaken to further improve the functionality of wind turbines. An important aspect in this regard may be the inspection of the wind turbine blades, in particular during operation. In this respect, a leaky feeder application may be especially useful, for example by monitoring the blade(s) using one or more leaky feeder as antenna(s) of a radar functionality.

Yet, for some applications of the leaky feeder, a calibration (of the leaky feeder path) may be necessary. In the first place, a calibration should be done as a quality check, if there is a fault, damage or change of the leaky feeder. In further (advanced) applications, it may be required to accurately determine a length information and/or a phase information. In order to determine these information, a calibration of the whole configuration may be needed.

Such a calibration may be conventionally done by actively sending and/or receiving a signal. State of the art calibration procedures are sending a signal with one antenna (electromagnetic wave) and receiving the signal with another one. Thus, conventionally there is a need of a second antenna and/or actively sending a signal.

Summary of the Invention

There may be a need to calibrate a leaky feeder path (with respect to a wind turbine) in an efficient and reliable manner.

This need may be met by the subject matter according to the independent claims. Advantageous embodiments of the present invention are described by the dependent claims.

According to a first aspect of the invention, there is described a calibration device (in particular for a wind turbine), comprising:

  i) a leaky feeder (in particular a leaky cable or a leaky wave guide), comprising a plurality of slots (the term slot may in this context also include slot groups), associated (responsive) to (specific) resonance frequencies,
  ii) at least one elongated conductor (in particular a lead-in and/or a lead-out cable), (electrically) connected to the leaky feeder,
  iii) a frequency device (e.g. a frequency generator), configured to provide an electromagnetic wave/signal (in particular a continuous wave) to the leaky feeder, and to sweep the electromagnetic wave over a frequency range (in particular high frequencies) that includes at least one of the resonance frequencies, and
  iv) a processing device (e.g. a controller), configured to a) determine the location of at least one slot (in particular of the slot in closest proximity to the elongated conductor), based on the sweep over the at least one resonance frequency, and b) perform a calibration operation based on the determined slot location (in particular further configured to determine a fault in the elongated conductor (lead-in/lead-out and/or leaky feeder cable) by detecting mismatches in the characteristic wave impedance).

According to a second aspect of the invention, there is described a wind turbine comprising:

  i) a tower,
  ii) a nacelle, coupled to the tower,
  iii) a wind rotor, which is arranged at the nacelle, and which comprises at least one blade (in particular three blades), and
  iv) a calibration device as described above.

According to a third aspect of the invention, there is described a method of calibrating a leaky feeder path (comprising a leaky feeder with a plurality of slots, coupled/connected to an elongated conductor, in particular for a wind turbine), the method comprising:

> i) providing an electromagnetic wave to the leaky feeder (path), thereby
> ii) sweeping the electromagnetic wave over a frequency range that includes at least one resonance frequency associated with the plurality of slots,
> iii) determining the location of the at least one slot of the leaky feeder based on the at least one resonance frequency, and
> iv) performing a calibration operation based on the determined slot location, (in particular further comprising: v)detecting a mismatch of the leaky feeder path (leaky feed-er/elongated conductor (cables)) at resonance and non-resonance frequencies).

According to a fourth aspect of the invention, there is described a use (method of using) of frequency domain reflectometry to calibrate a conductor-to-leaky-feeder path, in particular of a wind turbine.

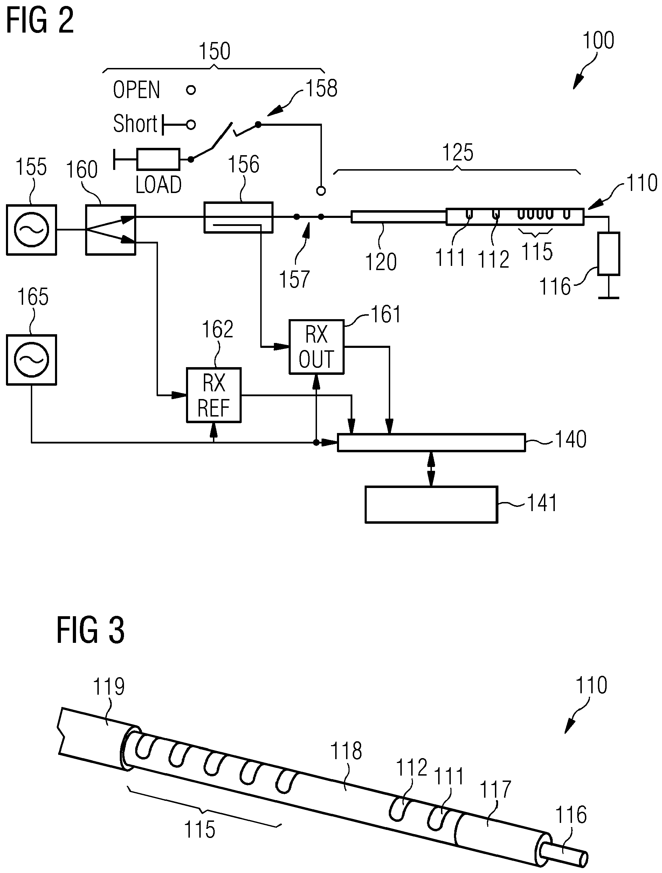

In the context of the present document, the term "leaky feeder" may in particular refer to an elongated structure that is configured as a transmitter and/or receiver of electromagnetic waves/signals, wherein the transmission/reception occurs at specifically defined slots/apertures (leaking). An exemplary embodiment of a leaky feeder is shown in Figure 3. The leaky feeder may be configured e.g. as a leaky coaxial cable, a leaky waveguide (in particular suitable at high frequencies), or a leaky stripline.

In an embodiment, the leaky feeder comprises a plurality of slots to allow an electromagnetic signal to leak out of the leaky feeder along its (entire or parts of) length. In a further embodiment, the leaky feeder comprises a plurality of slots to allow an electromagnetic signal to leak into the leaky feeder along its (entire) length. In the present document, the term "slot" may also include slot groups. In an embodiment, the slots/slot groups may be, regularly or irregularly distributed along the length of the leaky feeder.

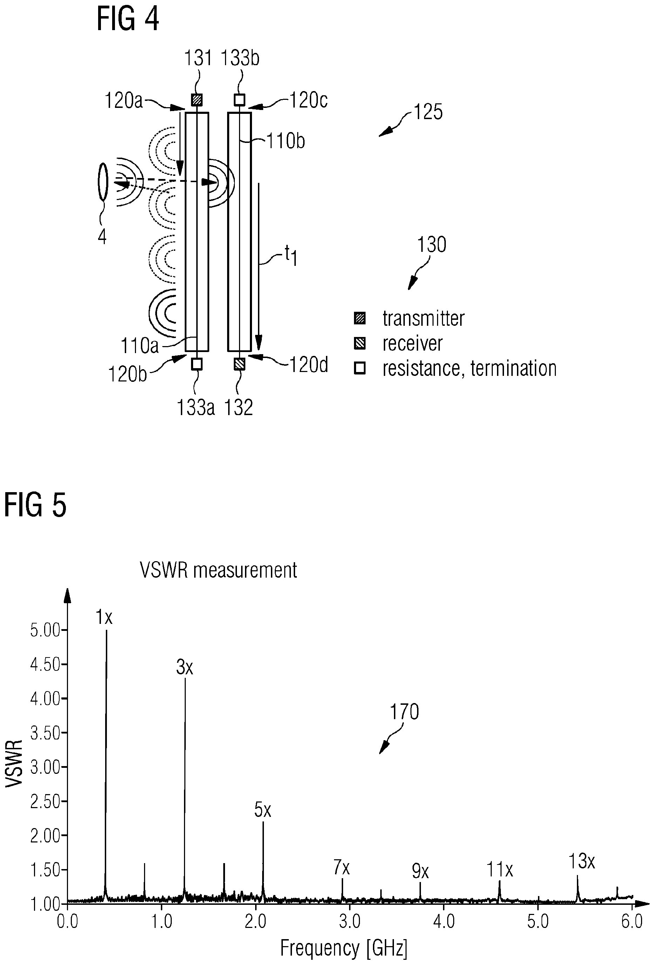

In an embodiment, the leaky feeder is coupled/connected to at least one of a transmitter (unit), a receiver (unit), a termination (unit), see e.g. the example of Figure 4. Hereby, the leaky feeder may be configured to transmit the signal provided by the transmitter (unit) and/or to provide a received signal to the receiver (unit).

In the context of the present document, the term "elongated conductor" may in particular refer to a conductor with a main extension in one spatial dimension, which is much larger than the extension in the other two spatial dimensions, for example a cable. The elongated conductor may serve as an electric connector between the leaky feeder and a communication-associated device, such as a transmitter, a receiver, or a termination. Hereby, the exact length of the elongated conductor may not be know and may have to be calibrated. A leaky feeder path may be defined as a (signal) path through the leaky feeder and the connected elongated conductor.

In the context of the present document, the term "frequency device" may in particular refer to a device suitable to provide an electromagnetic wave/signal and thereby sweep the signal over a predefined frequency range. Such a frequency device may be realized by a function generator, in particular a frequency generator. Different types of waveforms may be applied for the electromagnetic wave, for example sine wave, square wave, triangular wave, sawtooth shape, etc. The frequency device may be configured to variate the output frequency and amplitude (output power).

In the context of the present document, the term "resonance frequency" may in particular refer to the phenomenon that a response amplitude to an applied (specific) frequency is at a maximum for a system. In particular, the slots of a leaky feeder may be responsive to one or more specific resonance frequencies. When the frequency of the electromagnetic wave, provided by the frequency device to the leaky feeder, is swept over the resonance frequency associated with said slots, the response amplitude will reach a local maximum (visible as a peak in a VSWR diagram). This phenomenon is further illustrated in Figure 5.

In the context of the present document, the term "calibration operation" may in particular refer to any calibration that may be done with respect to a leaky feeder (in the context of a wind turbine). For example, such a calibration may be done regarding at least one slot location of the leaky feeder. Using the determination of the resonance frequency, as described above, the associated slot or start of slot group may be located precisely. Based on the slot location, further calibration steps may be performed. For example, a length information (e.g. length of the elongated conductor or length from a communication-associated device to the leaky feeder (via the elongated conductor), in particular to the first slot). Furthermore, based on said length information, further calibration may be performed, for example phase angle and amplitude information may be determined, and phase shifts may then be calibrated (for specific further applications, e.g. beam steering, blade inspection/monitoring, etc.).

In the context of the present document, the term "processing device" may in particular refer to any hardware and/or software suitable to perform the above described steps of determining the location of at least one slot and performing a calibration operation (based on the determined slot location). The processing device may comprise one or more processors. In an example, the processing device may be implemented as one or more processing units in the calibration device or the wind turbine, respectively. In another example, the processing device may be located (at least partially) outside of the wind turbine and operate remotely.

According to an exemplary embodiment, the invention may be based on the idea that a leaky feeder path (of a wind turbine) may be calibrated in an efficient and reliable manner, based on an approach that applies frequency domain reflectometry. In order to apply said technology for the present case, a disadvantage of the leaky feeder is exploited and turned it into an advantage for the calibration of the system: the resonance frequencies of the leaky feeder slots (high VSWR). The mismatch of wave impedance of the leaky feeder at resonance frequency may be used to calibrate the leaky feeder path (e.g. lead-in, lead-out and leaky feeder cable) configuration.

At those resonance frequencies, the return loss may be high. Much of the incident high frequency (HF) energy (of a transmitted electromagnetic wave) will be reflected to the transmitter at those resonance frequencies. This phenomenon is conventionally considered a disadvantage of a leaky feeder and frequencies are chosen to be clearly different from the resonance frequencies.

However, it has been surprisingly found by the inventors that this alleged disadvantage may be turned into an advantage by using those resonance frequencies to perform a frequency domain reflectometry and thereby determine the location, and accordingly distance/phase/amplitude, of the (first) leaky feeder slot/slot group.

A leaky feeder has fixed slots with a well-known and predefined distance between each slot and/or slot group. Every slot is working as a small antenna and radiating/receiving electromagnetic waves. In an example, no calibration is needed for the leaky feeder itself due to the fixed and predefined slots. Nevertheless, calibration may be necessary for the elongated conductor (lead-in/out cable) from/to a communication-associated device to the leaky feeder. Due to different lengths of those elongated conductors, and also the unknown length in the leaky feeder from the joint/connector (between elongated conductor and leaky feeder) to the first slot (this can also be a slot group), calibration-relevant parameters, such as the phase angle (e.g. of a feeding radar signal) is unknown. The described invention may provide an efficient and reliable manner to determine these parameters.

Exemplary Embodiments

According to an embodiment, the processing device is further configured to: determine a propagation time of the electromagnetic wave, in particular of the incident electromagnetic wave and/or the reflected electromagnetic wave. This may provide the advantage that the electromagnetic wave, provided by the frequency device, may be directly applied to determine the slot location based on the resonance frequency of said slot.

According to a further embodiment, the processing device is further configured to derive a length information with respect to the elongated conductor, in particular based on the slot location. This may provide the advantage that a versatile length information (potentially required for further calibrations) may be directly derivable. For example, the length of the elongated conductor may be determined or the length from a communication-associated device (via the elongated conductor) to the (first slot of the) leaky feeder.

In an example, the length from the communication-associated device to the first slot could be calculated by a time measurement of the incident and reflected electromagnetic wave (alternatively of a pulse):

$$\texttt{length to slot = 0.5 * } \Delta\texttt{t * Vf * C0}$$

wherein $\Delta t$ is the time difference between the incident and reflected wave/pulse. Vf is the velocity factor and a conductor specific value, for example 0.66 for an elongated conductor and 0.88 for a leaky feeder. Preferably, Vf values of the leaky feeder and the elongated conductor are equal. C0 is the speed of light.

In a preferred example, a continuous wave (CW) may be applied. In another example, a pulse can be used, in particular a pulse comprising multiple frequencies (afterwards Fourier analysis).

According to a further embodiment, the elongated conductor connects the leaky feeder to a communication-associated device, in particular at least one of a transmitter, a receiver, a termination (e.g. a resistor). In this context, the term "communication-associated device" may in particular refer to any device that is associated with a transmission/reception functionality of the leaky feeder. Said device may be connected to the leaky feeder via the elongated conductor. In an example, said device comprises a transmitter unit and/or a receiver unit. In another example, said device comprises a termination.

According to a further embodiment, the processing device is further configured to: determine a length/distance from the communication-associated device via the elongated conductor to the slot of the leaky feeder with the closest proximity (first slot) to the elongated conductor. This may provide the advantage that also distances with respect to the communication-associated device can be accurately determined.

According to a further embodiment, the processing device is further configured to derive a phase angle information from the length information. The phase angle information may be a valuable information for further calibration operations and applications of the leaky feeder (path).

In an example, the phase angle may be calculated as follows:

$$n = \text{length to slot/wavelength } \lambda$$

Hereby, n is an integer to be multiplied by 360°, for example in case n = 1.1, the phase angle would be 396°. The wavelength in a cable is shorter than the wavelength in free space, the "velocity factor" (Vf) is describing this phenomenon.

According to a further embodiment, the processing device is further configured to apply a distance-to-fault (DTF) measurement to derive the length information. Thereby, an established technology may be applied to determine the length information. In the present case, the "fault" to be determined would be the slot of the leaky feeder.

According to a further embodiment, the frequency device is configured to provide the electromagnetic wave as a continuous wave. In this manner, mismatch or faults could be detected. In another embodiment, pulse signals instead of continuous wave signals may be used. This may be especially useful for detecting mismatches or faults.

According to a further embodiment, the frequency device comprises a function generator, in particular a (variable) frequency generator. Thus, an established and accurate means may be directly applied to provide the frequency sweep to the leaky feeder path.

According to a further embodiment, the calibration device further comprises a network analyzer, in particular a vector network analyzer, having the frequency device. In an example, a leaky feeder path, which includes the leaky feeder and the elongated conductor, is applied as the device under test, DUT. Also in this example, an established and accurate technology may be directly applied for the described frequency domain reflectometry. A specific example of such an implementation is described in detail in Figure 2.

According to a further embodiment, the electromagnetic wave from the frequency device is split in i) a measuring path, coupled to the leaky feeder and/or elongated conductor, in particular through a directional coupler, and ii) a reference path. Thereby, an efficient network analyzer set-up may be provided.

According to a further embodiment, the leaky feeder is at least partially located in the tower circumferential direction, in particular (bent) inside or outside of the tower. Thereby, the length extension of the leaky feeder may be exploited in an advantageous manner.

According to a further embodiment, the method further comprising: determining a length information with respect to the leaky feeder path based on the determined slot location, in particular further comprising: deriving a phase angle information from the length information.

In an embodiment, the phase (angle) information may be important for advanced measurement setups, for example beam forming/steering with multiple leaky feeders parallel and/or close together.

In an embodiment, a calibration may be required to determine a length information, e.g. from the transmitter to the first slot/slot group, and to calculate with the length information the phase information. Furthermore, a "life" test of the system can be performed to detect faults like damages or moisture associated with the leaky feeder.

The aspects defined above and further aspects of the present invention are apparent from the examples of embodiment to be described hereinafter and are explained with reference to the examples of embodiment. The invention will be described in more detail hereinafter with reference to examples of embodiment but to which the invention is not limited.

Brief Description of the Drawings

Figure 1 shows a wind turbine with a calibration device in accordance with an exemplary embodiment of the present invention.
Figure 2 shows a calibration device in accordance with an exemplary embodiment of the present invention.
Figure 3 shows a leaky feeder in accordance with an exemplary embodiment of the present invention.
Figure 4 shows a leaky feeder path in accordance with an exemplary embodiment of the present invention.
Figure 5 shows a sweep over a frequency range that includes resonance frequencies corresponding to the leaky feeder slots in accordance with an exemplary embodiment of the present invention.
Figure 6 shows a method of calibrating a leaky feeder path in accordance with an exemplary embodiment of the present invention.

Detailed Description of the Drawings

The illustration in the drawing is schematic. It is noted that in different figures, similar or identical elements or features are provided with the same reference signs or with reference signs, which are different from the corresponding reference signs only within the first digit. In order to avoid unnecessary repetitions elements or features which have already been elucidated with respect to a previously described embodiment are not elucidated again at a later position of the description.

Further, spatially relative terms, such as "front" and "back", "above" and "below", "left" and "right", et cetera are used to describe an element's relationship to another element(s) as illustrated in the figures. Thus, the spatially relative terms may apply to orientations in use which differ from the orientation depicted in the figures. Obviously all such spatially relative terms refer to the orientation shown in the figures only for ease of description and are not necessarily limiting as an apparatus according to an embodiment of the invention can assume orientations different than those illustrated in the figures when in use.

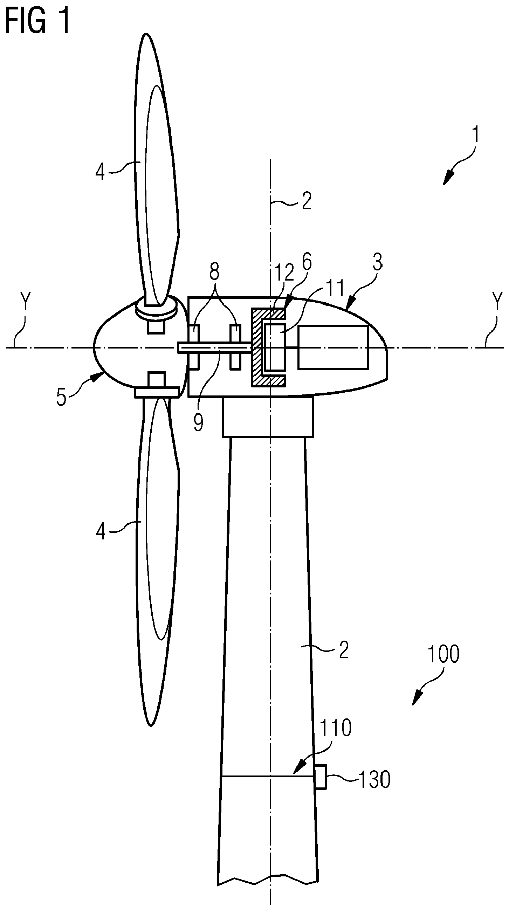

**Figure 1** shows a wind turbine 1 with a calibration device 100 in accordance with an exemplary embodiment of the present invention. The wind turbine 1 comprises a tower 2, which is mounted on a non-depicted fundament. A nacelle 3 is arranged on top of the tower 2. In between the tower 2 and the nacelle 3, a yaw angle adjustment device (not shown) is provided, which is capable of rotating the nacelle around a vertical yaw axis Z.

The wind turbine 1 further comprises a wind rotor 5 having one or more rotational blades 4 (in the perspective of Figure 1 only two blades 4 are visible). The wind rotor 5 is rotatable around a rotational axis Y. In general, when not differently specified, the terms axial, radial and circumferential in the following are made with reference to the rotational axis Y.

The blades 4 extend radially with respect to the rotational axis Y. The wind turbine 1 comprises an electric generator 6 having a stator 11 and a rotor 12. The rotor 12 is rotatable with respect to the stator 11 about the rotational axis Y to generate electrical power. The electric generator 6 and the generation of electrical power through the present invention is not a specific object of the present invention and therefore not described in further detail.

**Figure 2** shows a calibration device 100 in accordance with an exemplary embodiment of the present invention. The calibration device 100 comprises a leaky feeder path 125 that comprises a leaky feeder 110 (with a plurality of slots 112 including slot groups 115) connected to an elongated conductor 120, here a lead-in cable. The other extremity of the leaky feeder is terminated by a resistor 116.

The calibration device 100 further comprises a frequency device 155, here a frequency generator, that provides a continuous wave through the elongated conductor 120 and the leaky feeder 110. The output frequency and power of the frequency generator 155 can be configured within specific limits. In this example, a vector network analyzer (VNA) based set-up is implemented to perform and evaluate the sweep over the frequency range. The signal from the frequency generator 155 is divided by a splitter 160 into a measuring path to a measuring receiver 161 and a reference path to a referencing receiver 162. The measuring path is guided through a directional coupler 156, so that the reflected signal/wave from the device under test (DUT), here the leaky feeder path 125, can be provided to the measuring receiver 161. The measuring receiver 161 and the referencing receiver 162 are further coupled, together with a reference oscillator 165, to a processing device 140.

Based on the signals from the measuring path, the reference path, and the reference oscillator signal, the processing device 140 is enabled to determine a length information with respect to the elongated conductor 120, in particular to the first slot 111 of the leaky feeder 110, based on a determined resonance frequency 170 of said slot 111. The length information can serve as a base to calculate further parameters such as phase angle, amplitude, DTF, etc. which can be shown to an operator at a display 141. The determined parameters can then be used to perform a calibration operation of the leaky feeder path 125, for example adjusting the phase offset.

In the following, some specific embodiments and aspects of the calibration device 100 are described.

The calibration device 100 further comprises a calibration unit 150 that provides a calibration option to calibrate the whole VNA with three basic conditions (open, short, load). Those VNA calibration paths 158 can be activated via a switch 157. The directional coupler 156 is used to detect and decouple the reflected power of the DUT 125 and/or calibration path. In Figure 2, only the return port of the directional coupler 156 is used. It is also possible to use the forward port for more advanced (higher accuracy) calibration. It is also possible to mirror the VNA part, which is connected to only one end of the DUT 125 and connect a second VNA part to the second end of the DUT 125. This is then turning the one port VNA to a two port VNA. Both directions (ends) of the DUT 125 could then be calibrated and also the transmission coefficients (full S-parameter calibration: S11, S22, S12, S21). It is also possible to have a bypass cable, which is in parallel to the leaky feeder path 125 and/or leaky feeder 110 configuration. This bypass cable could be used to calibrate the mode "through", with a known characterized cable (only in two port VNA configuration). The calibration unit 150 (short, open, load) could also be installed between elongated conductor 120 and the leaky feeder 110. This measure can further increase the accuracy of the calibration.

Both ports of the directional coupler 156 could be used for the calculation of the VSWR. One port is measuring the forward power and the other port is measuring the reflected power. Then, it is possible not to use the reference receiver path including the splitter 160.

The signal from the directional coupler 156 can be a so-called RX DUT path. A local reference oscillator 165 is used to mix the intermediate frequency (IF). This configuration is also known as superheterodyne principle. An analog to digital converter (ADC) can then be used to digitize the signals. Then, calculation and determination of the amplitude and phase over frequency, reflection coefficient and also VSWR can be done. An inverse fast Fourier transformation can be used withing the processor to transform the signals from the frequency domain into the time domain. With the incident and reflected wave information it is also possible to calculate the distance to fault (DTF), here the slot 111 of the leaky feeder 110. The slot can be detected at the resonant frequencies. By sweeping with the variable frequency generator 155, it is possible to detect the resonant frequencies. Afterwards, the distance to fault (DTF) measurement/ calculation could be performed to detect the distance (length) from the VNA output to the first slot 111 of the leaky feeder 110. With this information, the cable/configuration is calibrated, and it could be used to determine the phase and/or amplitude offset, which can be required to calibrate the leaky feeder path 125 (compensate the elongated conductor 120).

The configuration could also be used to determine a characteristic fingerprint of each leaky feeder path 125 configuration. Small changes over time could be detected by storing measurement results in a memory and compare it with further measurements. This can allow to determine ageing of the cables or damages of the configuration, thereby doing predictive maintenance.

**Figure 3** shows a leaky feeder 110 in accordance with an exemplary embodiment of the present invention. In this example, the leaky feeder 110 is configured as a leaky coaxial cable. The center of the leaky feeder is a conductor 116, e.g. a copper cable/wire. The conductor 116 is embedded (encapsulated) in a dielectric material layer 117. Further, around the dielectric material layer 117, there is arranged a shielding layer (outer conductor) 118, e.g. a metal/copper layer. A plurality of slots (apertures) 112 is formed in said shielding layer 118. Thereby, it is enabled to transmit/receive electromagnetic signal along the length of the leaky feeder 110. Since the transmission/reception takes (essentially) only place at the slots, it is termed "leaking". Optionally, a protection layer (cable jacket), in particular a dielectric such as rubber material, more in particular with low optical coverage, can be arranged around the shielding layer 118. The slots 112 are located with predefined positions and distances between each other. The first slot 111 is the outermost slot with respect to the input or output of the leaky feeder 110. For example, an elongated conductor (not shown in this Figure) can be connected to the leaky feeder 110 in closest proximity to the first slot 111.

**Figure 4** shows a leaky feeder path 125 in accordance with an exemplary embodiment of the present invention. A first leaky feeder 110a is arranged at a wind turbine tower 2 and coupled at its extremities to communication-associated devices 130, in this example between a transmitter 131 and a terminator 133, e.g. a resistor. The connection to the transmitter 131 is realized by an elongated conductor 120a that serves as a lead-in cable, while the leaky feeder 110a is connected to the termination 133 by a further elongated conductor 120b that serves as a lead-out cable. In a comparable manner, a further leaky feeder 110b is connected through a lead-in cable 120c to a termination 133 and through a lead-out cable 120d to a receiver 132.

The transmitter 131 provides an electromagnetic signal through the lead-in cable 120a to the leaky feeder 110a, which transmits said signal along its entire length. In this specific example, the transmitted signal is reflected by a blade 4 of the wind turbine 1. Said reflected signal is then received by the further leaky feeder 110b at a specific position. The further leaky feeder 110b provides the received signal through the lead-out cable 120d to the receiver 132. In this configuration, a radar can be realized that can be used to inspect/monitor the wind turbine blade 4.

**Figure 5** shows a sweep over a frequency range that includes resonance frequencies 170 corresponding to the leaky feeder slots in accordance with an exemplary embodiment of the present invention. In particular, a (voltage) standing wave ratio ((V)SWR) of the leaky feeder 110 is determined. In this example, the leaky feeder 110 has a length of 60 meters. It can be seen that the VSWR value is around 1 over the whole frequency range (here 0 to 6 GHz). Nevertheless, the VSWR is significantly higher (up to five times) at the resonance frequencies 170 that corresponds to the slots 112 of the leaky feeder 110.

The voltage standing wave ratio (VSWR) is a typical quality indicator in the high frequency area. A perfect matched antenna or cable (characteristic wave impedance) can have a VSWR value of ~1.0. A mismatch will have higher values and therefore indicate a high return loss of the leaky feeder path configuration. Over a broad frequency range, the leaky feeder path can have a VSWR of ~100, except on its characteristic resonance frequencies. Those resonance frequencies are depending on the distribution of slots and slot groups from the leaky feeder. Typical VSWR values of the resonance frequencies are 3, 4 or 5 or even higher.

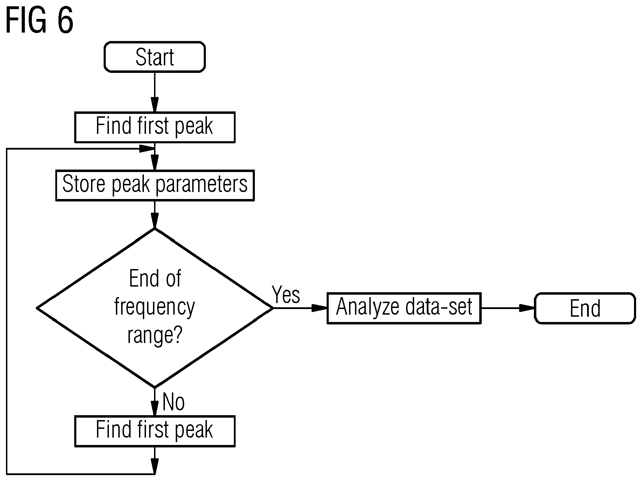

**Figure 6** shows a method of calibrating a leaky feeder path in accordance with an exemplary embodiment of the present invention. In the first place, a first resonance frequency 170 (first peak), corresponding to the first slot 111, is determined. The parameter (location) of the peak is then stored. If the sweep over the predefined frequency range is not yet finished, the procedure is repeated to determine the location of the next peak. In case that the sweep over the frequency range is finished, the obtained data set can be analyzed to perform the calibration operation as described above in detail.

In other words, the flow chart is showing the method of determining the characteristic resonance frequencies of the leaky feeder 110. The output power of the variable frequency generator 155 is increased after each frequency sweep. This allows to start with low output power and in this way ensuring effective radiated output power below the limits. To protect the RF spectrum, it may be avoided to transmit RF power above a certain level over the whole frequency range. Preferably, only small bands are reserved for specific applications.

After the determination of the resonant frequencies, the distance to fault (DTF), here: distance to first slot/slot group, could be estimated by measuring the propagation time of the incident and reflected wave. The propagation velocity (velocity factor) itself depends on the cable type and characteristics (dielectric material) and are known.

In an example, the propagation time can be much more precisely measured, compared to the time domain reflectometry (TDR), by detecting and comparing the phase angle of the incident and reflected wave by using the frequency domain reflectometry (FDR).

It should be noted that the term "comprising" does not exclude other elements or steps, and the use of the item "a" does not exclude multiplicity. Elements described in conjunction with various embodiments can also be combined. It should also be noted that reference signs in the claims should not be interpreted as limiting the scope of the claims.

Independent of the grammatical term usage, individuals with male, female or other gender identities are included within the term.

**Claims**

1.  A calibration device (100), in particular for a wind turbine (1), comprising:

    a leaky feeder (110), comprising a plurality of slots (111, 112), associated with resonance frequencies (170);
    an elongated conductor (120), in particular a lead-in and/or a lead-out cable, connected to the leaky feeder (110);
    a frequency device (155), configured to
    provide an electromagnetic wave to the leaky feeder (110), and sweep the electromagnetic wave over a frequency range that includes at least one of the resonance frequencies (170) of the leaky feeder (110); and
    a processing device (140), configured to determine the location of at least one slot (111) of the leaky feeder (110) based on the sweep over the at least one resonance frequency (170), and
    perform a calibration operation based on the determined slot location.

2.  The calibration device (100) according to claim 1, wherein the processing device (140) is further configured to:
    determine a propagation time of the electromagnetic wave, in particular of the incident wave and/or the reflected wave.

3.  The calibration device (100) according to any one of the preceding claims, wherein the processing device (140) is further configured to:
    derive a length information with respect to the elongated conductor (120), in particular based on the slot location, more in particular based on the propagation time and/or amplitude.

4.  The calibration device (100) according to any one of the preceding claims,

    wherein the elongated conductor (120) connects the leaky feeder (110) to a communication-associated device (130),
    in particular at least one of a transmitter (131), a receiver (132), a termination (133).

5.  The calibration device (100) according to claim 4, wherein the processing device (140) is further configured to:
    determine a distance from the communication-associated device (130) via the elongated conductor (120) to the slot of the leaky feeder (110) with the closest proximity (111) to the elongated conductor (120).

6.  The calibration device (100) according to any one of the preceding claims 3 to 5, wherein the processing device (140) is further configured to:
    derive a phase angle information and/or an amplitude information from the length information.

7.  The calibration device (100) according to any one of the preceding claims 3 to 6, wherein the processing device (140) is further configured to
    apply a distance-to-fault measurement to derive the length information.

8.  The calibration device (100) according to any one of the preceding claims,

wherein the frequency device (155) is configured to provide the electromagnetic wave as a continuous wave; and/or wherein the frequency device (155) comprises a variable frequency generator.

9. The calibration device (100) according to any one of the preceding claims, further comprising:
a network analyzer, in particular a vector network analyzer, having the frequency device (155),
wherein a leaky feeder path (125), which includes the leaky feeder (110) and the elongated conductor (120), is applied as the device under test, DUT.

10. The calibration device (100) according to any one of the preceding claims,
wherein the electromagnetic wave from the frequency device (155) is split in a measuring path (161), coupled to the leaky feeder (110) and/or elongated conductor (120), in particular through a directional coupler (156), and a reference path (162).

11. A wind turbine (1) comprising:

a tower (2);
a nacelle (3), coupled to the tower (1);
a wind rotor (5), which is arranged at the nacelle (3), and which comprises at least one blade (4); and
a calibration device (100) according to any one of the preceding claims.

12. The wind turbine (1) according to claim 11,
wherein the leaky feeder (110) is at least partially located in the tower circumferential direction, in particular inside or outside of the tower (2).

13. A method of calibrating a leaky feeder path (125) comprising a leaky feeder (110) with a plurality of slots (111, 112) and an elongated conductor (120) coupled to the leaky feeder (110), in particular for a wind turbine (1), the method comprising:

providing an electromagnetic wave to the leaky feeder path (125), thereby
sweeping the electromagnetic wave over a frequency range that includes at least one resonance frequency associated with the plurality of slots (111, 112);
determining the location of the at least one slot of the leaky feeder (110) based on the at least one resonance frequency (170); and
performing a calibration operation based on the determined slot location.

14. The method according to claim 13, further comprising:
determining a length information with respect to the leaky feeder path (125) based on the determined slot location, in particular further comprising: deriving a phase angle information from the length information.

15. Using frequency domain reflectometry to calibrate a conductor-to-leaky-feeder path (125), in particular of a wind turbine.

FIG 1

FIG 2

FIG 3

## FIG 4

## FIG 5

VSWR measurement

FIG 6

```
                    ┌──────────┐
                    │  Start   │
                    └────┬─────┘
                         │
                         ▼
              ┌──────────────────┐
      ┌──────▶│  Find first peak │
      │       └────────┬─────────┘
      │                │
      │                ▼
      │     ┌─────────────────────────┐
      │     │  Store peak parameters  │
      │     └───────────┬─────────────┘
      │                 │
      │                 ▼
      │              ╱╲
      │            ╱    ╲
      │          ╱        ╲
      │        ╱   End of   ╲    Yes    ┌──────────────────┐      ┌────────┐
      │       ╱  frequency   ╲─────────▶│  Analyze data-set│─────▶│  End   │
      │        ╲   range?    ╱          └──────────────────┘      └────────┘
      │          ╲        ╱
      │            ╲    ╱
      │              ╲╱
      │               │ No
      │               ▼
      │     ┌──────────────────┐
      │     │  Find first peak │
      │     └────────┬─────────┘
      │              │
      └──────────────┘
```

**EP 4 431 731 A1**

Europäisches Patentamt
European Patent Office
Office européen des brevets

# EUROPEAN SEARCH REPORT

Application Number

EP 23 16 1379

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 2 596 582 A1 (KAELUS PTY LTD [AU]) 29 May 2013 (2013-05-29) * paragraphs [0001], [0002], [0044], [0064] – [0068] * | 15 | INV. F03D17/00 H01Q13/20 H04B5/00 |
| | ----- | | |
| X | KUMAR VIRENDRA ET AL: "Design Investigation of Leaky Coaxial Cable as Coupler for Active Phased Array Calibration", 2019 IEEE INDIAN CONFERENCE ON ANTENNAS AND PROPOGATION (INCAP), IEEE, 19 December 2019 (2019-12-19), pages 1-5, XP033789701, DOI: 10.1109/INCAP47789.2019.9134675 [retrieved on 2020-07-06] * the whole document * | 15 | |
| | ----- | | |
| A | US 2022/178785 A1 (NAGEL EIRIK [DE] ET AL) 9 June 2022 (2022-06-09) * paragraphs [0002], [0050], [0068] * * figures 1-4 * | 1-15 | |
| | ----- | | **TECHNICAL FIELDS SEARCHED (IPC)** |
| A | US 2022/179045 A1 (NAGEL EIRIK [DE] ET AL) 9 June 2022 (2022-06-09) * paragraphs [0050] – [0055] * * figures 1,2,4 * | 1-15 | F03D H01Q H04B |
| | ----- | | |

The present search report has been drawn up for all claims

| Place of search | Date of completion of the search | Examiner |
|---|---|---|
| The Hague | 14 August 2023 | Pasquet, Pierre |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

.......................................................................................

& : member of the same patent family, corresponding document

EPO FORM 1503 03.82 (P04C01)

14

**EP 4 431 731 A1**

## ANNEX TO THE EUROPEAN SEARCH REPORT
## ON EUROPEAN PATENT APPLICATION NO.

EP 23 16 1379

This annex lists the patent family members relating to the patent documents cited in the above-mentioned European search report.
The members are as contained in the European Patent Office EDP file on
The European Patent Office is in no way liable for these particulars which are merely given for the purpose of information.

14-08-2023

| Patent document cited in search report | | Publication date | Patent family member(s) | | Publication date |
|---|---|---|---|---|---|
| EP 2596582 | A1 | 29-05-2013 | AU | 2011282473 A1 | 07-03-2013 |
| | | | BR 112013001525 A2 | | 10-05-2016 |
| | | | CN | 103119845 A | 22-05-2013 |
| | | | DK | 2596582 T3 | 31-07-2017 |
| | | | EP | 2596582 A1 | 29-05-2013 |
| | | | US | 2013182753 A1 | 18-07-2013 |
| | | | WO | 2012009757 A1 | 26-01-2012 |
| US 2022178785 | A1 | 09-06-2022 | CN | 113631905 A | 09-11-2021 |
| | | | EP | 3719475 A1 | 07-10-2020 |
| | | | EP | 3924709 A1 | 22-12-2021 |
| | | | US | 2022178785 A1 | 09-06-2022 |
| | | | WO | 2020200755 A1 | 08-10-2020 |
| US 2022179045 | A1 | 09-06-2022 | CN | 113646656 A | 12-11-2021 |
| | | | EP | 3719528 A1 | 07-10-2020 |
| | | | EP | 3928120 A1 | 29-12-2021 |
| | | | US | 2022179045 A1 | 09-06-2022 |
| | | | WO | 2020200746 A1 | 08-10-2020 |

EPO FORM P0459

For more details about this annex : see Official Journal of the European Patent Office, No. 12/82